# EUROPEAN PATENT APPLICATION

(11) **EP 4 726 582 A1**
(43) Date of publication of application: **15.04.2026**
(21) Application number: 25206843.2
(22) Date of filing: 06.10.2025
(51) Int. Cl.: G06F 21/33, G06F 11/362, G06F 21/57, G06F 21/74, G06F 21/87

(54) **DYNAMIC SWITCH AND ACCESS CONTROL (DSAC) FOR MULTI-COHORT SYSTEM-ON-CHIP (SOC) DEBUGGING**

(30) Priority: 09.10.2024 IN 202441076463
(71) Applicant: NXP USA, Inc., Austin, TX 78735 (US)
(72) Inventor: Agarwal, Ayushi, 5656AG Eindhoven (NL); Case, Lawrence Loren, 5656AG Eindhoven (NL); Chopra, Aditya Vikram, 5656AG Eindhoven (NL)
(74) Representative: Miles, John Richard

(57) **Abstract**

Systems and methods for Dynamic Switch and Access Control (DSAC) for multi-cohort System-on-Chip (SoC) debugging. In an illustrative, non-limiting embodiment, an SoC may include: an interconnect and a DSAC circuit coupled to the interconnect, the DSAC circuit configured to: enable a debug session for a first debug requestor, at least in part, in response to authentication of a first cohort identity provided by the first debug requestor; and enable a second debug requestor to participate in the debug session concurrently with the first debug requestor, at least in part, in response to authentication of a second cohort identity provided by the second debug requestor.

## Description

### Field

This disclosure relates generally to electronic circuits, and more specifically, to systems and methods for Dynamic Switch and Access Control (DSAC) for multi-cohort System-on-Chip (SoC) debugging.

### Background

Debugging is the process of identifying, analyzing, and resolving issues or defects within a system, typically in software or hardware. In the context of System-on-Chip (SoC) architectures, debugging involves examining the actions of various components, such as processors, memory, and peripherals, to ensure they operate correctly and efficiently. Debugging may be performed using various tools and techniques, including local debuggers (e.g., Joint Test Action Group or "JTAG" -based) and remote debugging sessions facilitated by on-chip software. Generally, the goal of debugging is to detect and fix errors, optimize performance, and ensure the overall reliability and security of the SoC.

Tracing, on the other hand, involves monitoring and recording the behavior of an SoC over time to understand its execution flow and identify performance bottlenecks or anomalies. Tracing may provide detailed insights into the interactions between different components and the timing of various events within the SoC.

The term "debugging" is sometimes used to cover both debugging and tracing activities, as both are usable for diagnosing and resolving issues.

### Brief Description of the Drawings

The present disclosure is illustrated by way of example and are not limited by the accompanying figures, in which like references indicate similar elements. Elements in the figures are illustrated for simplicity and clarity and have not necessarily been drawn to scale.
FIG. 1 is a diagram of an example of an electronic device, according to some embodiments.
FIG. 2 is a diagram of an example of a multi-cohort debug architecture in a System-on-Chip (SoC), according to some embodiments.
FIGs. 3A and 3B are diagrams of an example of a portion of a multi-cohort debug architecture including a Dynamic Switch and Access Control (DSAC) circuit or block, according to some embodiments.
FIG. 4 is a diagram of examples of status and control registers usable by the DSAC circuit or block, according to some embodiments.
FIG. 5 is a diagram of an example of a port control state machine of the DSAC circuit or block, according to some embodiments.
FIG. 6 is a table of examples of possible states of the port control state machine, according to some embodiments.
FIG. 7 is a graph of signals triggering different states of the port control state machine of the semaphore state machine, according to some embodiments.
FIG. 8 is a table of examples of debug access enabling behavior, according to some embodiments.
FIG. 9 is a diagram of an example of a semaphore state machine of the DSAC circuit or block, according to some embodiments.
FIGs. 10A and 10B are a table of examples of possible states of the semaphore state machine, according to some embodiments.

### Detailed Description

In modem SoC architectures, multiple execution environments may coexist on a single platform. These environments may include both software and hardware resources. Each environment may be managed by different vendors, some of whom may not trust each other. Debugging issues related to shared resources often require a single or multi-environment debug session. These debug sessions may be initiated remotely with assistance from on-chip software or from a local debugger.

However, existing solutions for debugging System-on-Chip (SoC) architectures lack robust mechanisms to ensure that only authenticated environments from the correct debugger locale have access to debug sessions. These deficiencies can lead to unauthorized access, compromising the security and integrity of the system. Additionally, conventional techniques do not provide a seamless way to switch debug sessions between different environments without risking data corruption. The absence of such mechanisms is more problematic in multi-environment debug sessions, where multiple execution environments (i.e., "cohorts") may coexist and interact on the same SoC.

To address these, and other concerns, systems and methods described herein may provide systems and methods for Dynamic Switch and Access Control (DSAC) for multi-cohort SoC debugging that may result in more secure, efficient, and reliable approach to debugging in SoCs. In various embodiments, these systems and methods may dynamically switch and control access for debugging multiple cohorts in a zonal architecture of a SoC.

Particularly, systems and methods described herein introduce a DSAC circuit or block that enables seamless switching of debug access between different cohorts in a multi-cohort debug session. The DSAC may ensure that only authenticated cohorts from the correct debugger locale have access to debug, thereby preventing unauthorized access and potential data corruption. In a cohort-based zonal architecture, each cohort may be owned by different vendors, and the DSAC may ensure that debug sessions are isolated and secure, preventing one cohort from accessing the debug information of another.

The DSAC may also be configured such that only authenticated debug requestors can initiate a debug session. It may use a security enclave to manage valid cohort IDs and enforce access control policies, thereby providing robust security for both local (JTAG-based) and remote (software-initiated) debug sessions.

In some implementations, the DSAC may employ a semaphore mechanism to manage access to shared resources during a debug session. Such a mechanism may be configured to ensure that debug transactions are atomic and do not interfere with each other, thus preventing data corruption when multiple cohorts are being debugged simultaneously.

Additionally, the DSAC may include a port control interface that dynamically manages access rights for different initiator ports (JTAG or software) based on the security enclave's access control policy. This may allow for distinct, concurrent access rights, so that debug sessions may be conducted in a controlled and secure manner.

Systems and methods described herein may also feature an ID selector circuit or block that allows the debugger to assume any valid cohort identity which has been authenticated, facilitating the debug of multiple cohorts in a single session. It may further include cohort ID (CID) capture circuits or blocks that utilize upper address bits or control registers to determine the cohort identity for both JTAG and software-based debuggers.

In some embodiments, these systems and methods may provide mechanisms for exclusive access to debug infrastructure and system interconnects, ensuring that only the authorized cohort or port can access the debug resources at any given time, so as to maintain the integrity and security of the debug session.

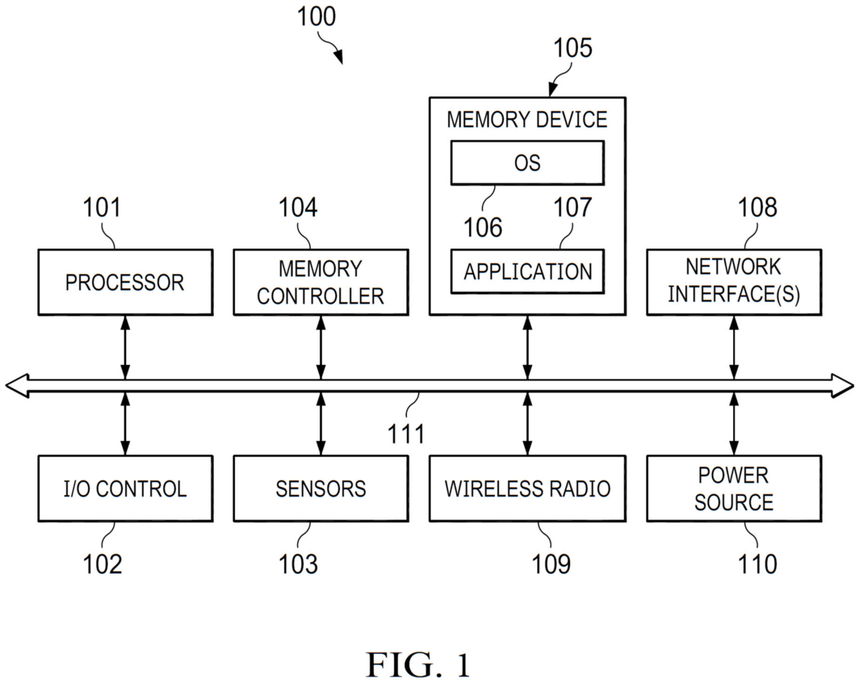

As such, various systems and methods described herein may provide secure, dynamic, and efficient debugging in a multi-cohort zonal architecture, addressing various challenges including, but not limited to, shared resource access, authentication, and data integrity in any SoC device-an example of which is illustrated FIG. 1.

FIG. 1 shows a non-limiting example of electronic device 100 where systems and methods for DSAC for multi-cohort SoC debugging may be implemented. In various embodiments, device 100 may be integrated with electronic circuitry, microprocessors, microcontrollers, memory, input output (I/O) logic control, communication interfaces and components, as well as other hardware, firmware, or software. Moreover, one or more components of device 100 may be part of an SoC or heterogenous computing platform.

Device 100 includes processor 101 (e.g., a controller, a microcontroller, a digital signal processor, etc.) configured to execute program instructions stored in memory device 105 for implementing various systems and methods described herein. Processor 101 may include components of an integrated circuit, programmable logic device, a logic device formed using one or more semiconductors, and other implementations in silicon or hardware.

In some cases, processor 101 may include two domains: (i) a low-power microprocessor, core, or domain, and (ii) a high-power microprocessor, core, or domain. The high-power microprocessor may execute computationally intensive operations, whereas the low-power microprocessor may manage simpler processes, such as detecting inputs from one or more sensors. The low-power processor may also wake or initialize the high-power processor for computationally intensive processes. More generally, processor 101 may include any number of such domains.

In device 100, data bus 111 couples its various components and enables data communication between those components. Data bus 111 may be implemented as any suitable combination of one or more bus structures or bus architectures. Device 100 also includes power source 110, such as a battery or an AC-DC power supply.

Sensors 103 may be implemented to detect various properties such as acceleration, temperature, humidity, water, supplied power, proximity, external motion, device motion, sound signals, ultrasound signals, light signals, fire, smoke, carbon monoxide, Global-Positioning-Satellite (GPS) signals, radio frequency (RF), other electromagnetic signals or fields, or the like. As such, sensors 103 may include any one or a combination of temperature sensors, humidity sensors, hazard-related sensors, other environmental sensors, accelerometers, microphones, optical sensors up to and including cameras (e.g., charged coupled-device or video cameras, active or passive radiation sensors, GPS receivers, and RF identification (ID) detectors).

Memory controller 104 and memory device 105 may implement any type of nonvolatile memory or other suitable electronic storage device. Device 100 may include various firmware or software, such as Operating System (OS) 106 maintained as computer executable instructions in memory 105 and executed by processor 101. Moreover, application 107 may include a distance estimation application that implements various aspects of the systems and methods described herein.

Input-output (I/O) control 102 may be configured to receive input from a user or provide information to the user. For example, I/O control 102 may also include mechanical or virtual components that respond to a user input. For example, the user can mechanically move a sliding or rotatable component, or the motion along a touchpad may be detected, and may correspond to a setting of device 100.

Device 100 includes network interfaces 108, such as a mesh network interface for communication with other devices in a wireless mesh network, and an external network interface for network communication, such as via the Internet. Wireless radio system 109 may be used for wireless communication with other devices via network interface 108 and for multiple, different wireless communications systems. For instance, radio system 109 may include a radio device, antenna, and chipset implemented for any given wireless communications technology, such as, for example, Wi-Fi, BLUETOOTH (BT), BT Low-Energy (BLE), Mobile Broadband, point-to-point IEEE 802.15.4, etc.

When SoC 100 includes a cohort-based zonal architecture, debugging issues related to shared resources such as Network-on-Chip (NoC) and memories often require a single-cohort or multi-cohort debug session. These cohorts may be from the same vendor or from multiple different vendors. Additionally, a debug session may be initiated remotely with assistance from on-chip software or from a local JTAG-based debugger.

For these, and other types of debugging or tracing operations, systems and methods described herein may ensure that only authenticated cohorts from the correct debugger locale have access to the debug session. Furthermore, these systems and methods may switch a debug session from one cohort to another in a graceful manner, without causing data corruption or other errors. In a cohort-based zonal architecture, a DSAC may enable cohort debugging from the allowed origin (local or remote) and facilitate dynamic switching of debug access between cohorts in a multi-cohort debug session after successfully authenticating the debug requestor.

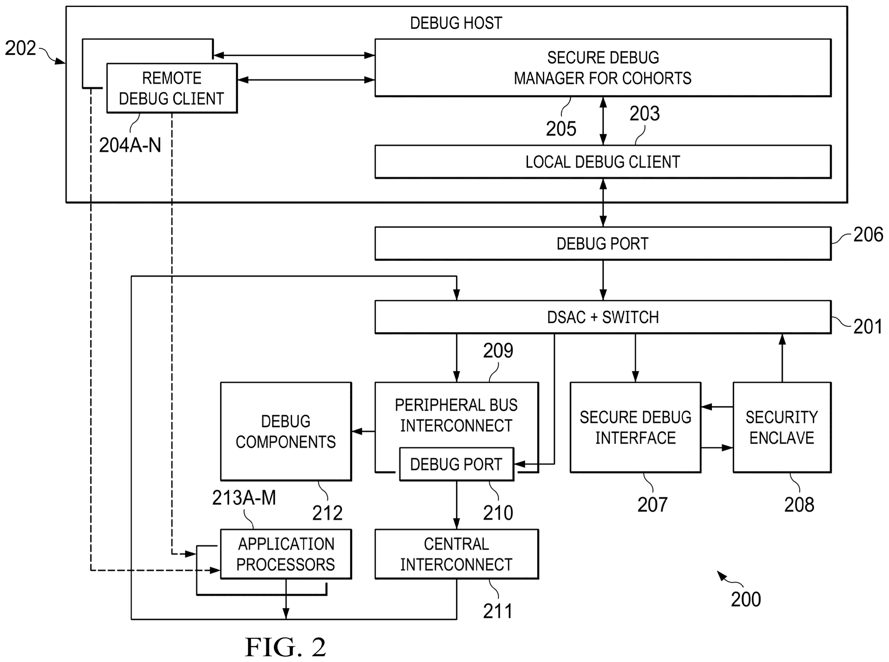

FIG. 2 is a diagram of an example of multi-cohort debug architecture 200 in SoC 100. In this implementation, architecture 200 may include: DSAC + switch 201, debug host 202, remote debug client (RDC) 204A-N, local debug client (LDC) 203, secure debug manager for cohorts (SDMFC) 205, debug port 206, secure debug interface (SDI) 207, security enclave 208, peripheral bus interconnect (PBI) 209, debug port 210, central interconnect 211, debug components 212, and application processors 213A-M.

DSAC + switch 201 may include a circuit configured for dynamically switching debug access between different cohorts during a multi-cohort debug session. In some cases, DSAC + switch 201 may ensure that only authenticated cohorts from the correct debugger locale have access to debug, preventing unauthorized access and potential data corruption.

Debug host 202 may include a primary interface for managing debug sessions, including both local and remote debug clients that interact with multi-cohort debug architecture 200 to initiate and control debug operations. Meanwhile, RDCs 204A-N may include components within debug host 202 that initiate and manage debug sessions remotely, with assistance from on-chip software. In some cases, multiple RDCs 204A-N may be supported concurrently.

LDC 203 may include a component within debug host 202 that initiates and manages debug sessions from a local debugger, such as a JTAG-based debugger. SDMFC 205 may be responsible for managing and coordinating debug sessions for different cohorts. Also, SDMFC 205 may ensure that only authenticated cohorts participate in debug sessions at least in part, by enforcing access control policies provided by the security enclave.

Debug port 206 may include the interface through which debug commands and data are transmitted between debug host 202 and DSAC + switch 201. As such, debug port 206 may support both local and remote debug clients. SDI 207 may be configured to provide a secure channel for transmitting debug commands and data, so that only authenticated and authorized users can access the debug features of SoC 100.

Security enclave 208 may be responsible for managing security aspects of the debug session. For example, security enclave 208 may verify the identity of debug requestors, manage valid cohort IDs, and enforce access control policies to ensure secure and controlled debug operations. PBI 209 (e.g., Advanced Peripheral Bus Interconnect or "APBIC," etc.) may facilitate communication between the debug components and other parts of the SoC. Particularly, PBI 209 may route debug-related transactions so that debug commands and data may be correctly transmitted between the debug interface and the target components within SoC 100.

Debug port 210 may be an additional interface that allows access to the debug infrastructure from various sources, including local and remote debug clients. Central interconnect 211 includes a communication fabric within SoC 100, allowing data to be transmitted between different components, including DSAC + switch 201, application processors, and debug components.

Debug components 212 may include various hardware and software modules within the SoC that are involved in the debugging process, which may interact with DSAC + switch 201 to facilitate debug operations. Application processors 213A-M are processing units within SoC 100, and as such may execute program instructions and perform various computational tasks. During a debug session, application processors 213A-M may interact with DSAC + switch 201 to provide debug information and facilitate debugging operations.

Still referring to FIG. 2, interface(s) between SDMFC 205 and LDC 203/RDCs 204AN may allow a debug user to log in and acquire a debug token, which includes the cohort identity (CID). The debug token may be usable for authenticating the user and granting access to the debug session. In some implementations, interface(s) between RDCs 204A-N and corresponding SoC debug channels may facilitate secure network communication by ensuring that only authenticated and authorized users may initiate and manage remote debug sessions. Meanwhile, interface(s) between LDC 203 and debug port 206 may include a JTAG interface, or the like, which allows DSAC + switch 201 to manage and control local debug sessions.

Debug port 206 may be coupled to DSAC + switch 201 via a communication channel for debug-related transactions within a selected address range. Typically, this interface does not include a cohort identity, yet debug port 206 may provide a secure debug channel facilitating debug authentication (distinct from general debugging). In contrast, RDCs 204AN are coupled to DSAC + switch 201 via central interconnect 211. These interfaces may include a cohort identity in the bus transactions, allowing the DSAC to identify and manage access based on the cohort identity, thus conducting debug operations in a controlled and secure manner.

Security enclave 208 may be coupled to DSAC + switch 201 via one or more interfaces: (a) a dedicated bus may be used by security enclave 208 to communicate with DSAC + switch 201 and load a list of permitted cohort identities, so that only authorized cohorts may participate in debug sessions; (b) a security control interface where messages or signals may enable the enforcement of access control policies and the management of security aspects during debug sessions; and (c) an authentication messaging interface that allows debug-related transactions to pass through SDI 207 (e.g., a Secure Debug Channel or "SDC-600") so that only authenticated and authorized debug operations are allowed.

In some implementations, PBI 209 may provide: (a) a first access point to debug components 212 without CID information but expanded address range, making it suitable for certain types of debug operations; and (b) a second access point to central interconnect 211 (to reach the outside the debug infrastructure) that requires CID information, for example, for access control purposes. For instance, CIDs may be assigned by a partitioning manager at the time of boot. DSAC + switch 201 may select the appropriate cohort identity for the current debug operation, and it may provide it to the second access point so that debug operations may be conducted under the correct CID.

Security enclave 208 interfaces with debug components 212 to enable or disable debug access based on a verified debug token provided to a debug client by SDMFC 205 so that only authenticated and authorized users may access selected debug features of SoC 100.

In various embodiments, multi-cohort debug architecture 200 may enable a debug session for a first debug requestor by authenticating a first cohort identity. This authentication mechanism may prevent unauthorized access, thereby enhancing the security and integrity of SoC 100. By allowing a second debug requestor to participate in the debug session concurrently with the first debug requestor, architecture 200 MAY facilitate collaborative debugging across multiple cohorts. This concurrent access may be managed through authentication of the second cohort identity, ensuring that only trusted entities can join the debug session, which may be particularly useful in scenarios where debugging issues related to shared resources require input from multiple vendors or execution environments.

Multi-cohort debug architecture's 200 ability to dynamically switch and control access between different cohorts during a multi-cohort debug session enables debug operations to be conducted in a secure and controlled manner, preventing data corruption and unauthorized access, and maintaining the integrity of the debug session.

As such, multi-cohort debug architecture 200 may provide a seamless way to manage multi-cohort debug sessions without the need for a reset or risking data corruption. This may be implemented through access control policies and authentication mechanisms enforced by security enclave 208, which may enhance security and improve the efficiency and reliability of the debugging process in SoC 100.

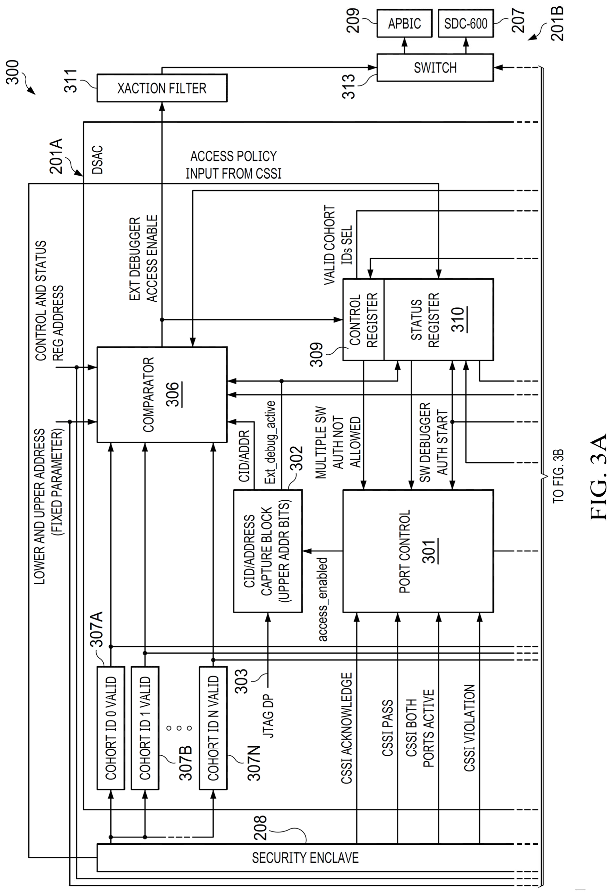

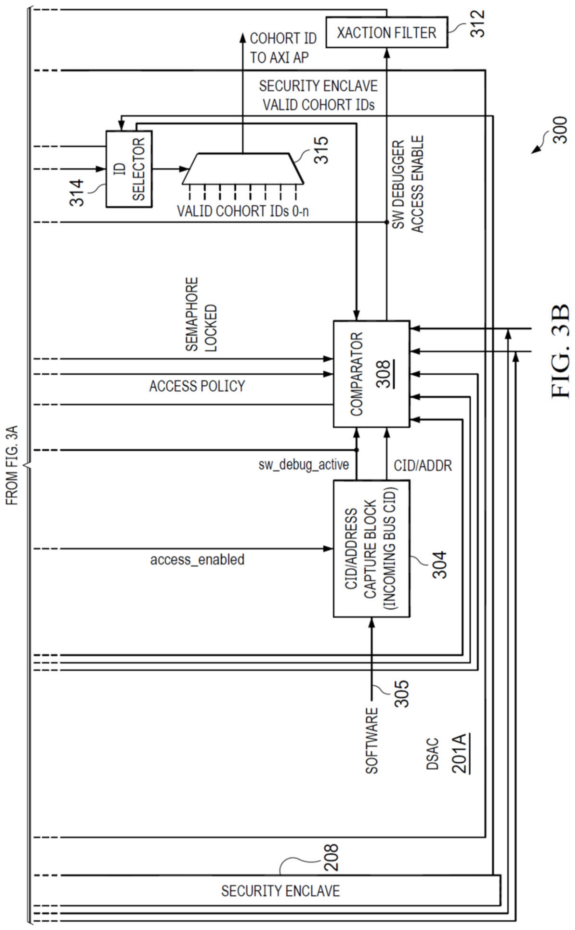

FIGs. 3A and 3B are diagrams of an example of a portion 300 of multi-cohort debug architecture 200 including DSAC circuit or block 201A. As shown, security enclave 208 is configured to manage security aspects of the debug session, verifying the identity of debug requestors and enforcing access control policies. In operation security enclave 208 may interface with DSAC 201A to ensure that only authenticated and authorized users can access the debug features of SoC 100.

PBI 209 may facilitate communication between debug components 212 and other parts of SoC 100. PBI 209 may route debug-related transactions so that debug commands and data are correctly transmitted between their respective debug interfaces and the target components within SoC 100.

Port Control circuit or block 301 may be configured to dynamically manage access rights for different initiator ports based on the security enclave's access control policy. As such, port control 301 may enable debug sessions to be conducted in a controlled and secure manner. Particularly, CID/Address Capture Block 302 may capture CID information from upper address bits for debug requestors. CID/Address Capture Block 302 may then provide the captured CID to comparator 306 for validation. JTAG Debug Port (DP) 303 may also serve as an interface for local debug sessions, such as those initiated by a JTAG-based debugger. In that case, JTAG DP 303 may interact with port control 301 to manage and control local debug sessions.

Comparator 306 may receive a captured cohort identity from CID/Address Capture Block 302 and a valid CID from control registers 309. Comparator 306 may then determine if a captured CID matches a valid CID, as indicated by valid flags 307A-N provided by security enclave 208, thus enabling or denying access to the debug session accordingly.

Control registers 309 may store control information for managing the debug session, as it interacts with comparator 306 and other components to enforce access control policies. Meanwhile, status registers 310 may record the status of the debug session, including the identity of the current debug requestor holding a lock bit. Status registers 310 may allow other debug requestors to poll the status of the lock bit and gain access to shared SoC resources when the lock bit is released.

Transaction ("Xaction") filter 311 may be configured to filter debug-related transactions based on access control policies provided by security enclave 208, so that only authorized transactions may be allowed to proceed. Xaction filter 311 may ensure that all transactions valid or invalid complete with a response, for example, so that the bus is not hung in case of an invalid transaction.

Switch 313 may dynamically switch debug access between different cohorts during a multi-cohort debug session. As shown, switch 313 is coupled to APBIC 209 and SDC-600 207. As such, switch 313 may ensure that debug operations are conducted in a controlled and secure manner, preventing data corruption and unauthorized access.

Between security enclave 208 and port control 301, a Central Security and Safety Infrastructure (CSSI) interface may be used to manage security and safety features, including authentication, access control, and enforcement of security policies. Signals and messages exchanged over this interface may include "Acknowledge," "Pass," "Both Ports Active," and "Violation"-which may be used by port control 301 to manage access rights and enforce access control policies during a debug session, for example, by providing an "access_enable" signal to comparator 306. "Lower and Upper Address and Control" and "Status Register Addresses" may include address parameters usable by comparator 306 and other components to manage debug-related transactions.

In some cases, the "Ext Debugger Access Enable" signal output by comparator 306 may enable access to the debug session for external debuggers, which may in turn interact with port control 301 via control registers 309 to manage access rights for external debug requestors. Meanwhile, "Access Policy Input" from security enclave 208 may provide access control policies port control 301 via status registers 310. Valid Cohort IDs Sel 315 may be configured to select the valid cohort identities for the current debug session under control of ID selector 314 to validate a captured cohort identity.

In response to a policy input, control registers 309 may provide a signal to port control 301 that prevents multiple software-based debug requestors from being authenticated simultaneously, allowing only one software-based debug requestor can access the debug session at a time. Additionally, or alternatively, status registers 310 may initiate an authentication process for software-based debug requestors, interacting with port control 301 and security enclave 208 to authenticate the debug requestor.

An "Ext_debug_active" signal may be provided by CID/address capture block 302 to comparator 306 and status register 310 to indicate the active status of an external debug session so that port control 301 may manage access rights for external debug requestors. CID/address capture block 302 may also provide a "CID/Addr" signal to comparator 306 to validate the captured cohort identity.

Software input 305 interacts with DSAC 201A to initiate and manage debug sessions. Particularly, software input 305 may facilitate both local and remote debugging operations. CID/Address Capture Block 304 (e.g., Incoming Bus CID) may capture CID information from an incoming bus or control register for debug requestors and provide the captured CID to comparator 308 for validation.

Comparator 308 may receive a captured CID and a valid CID from security enclave 208, and it may determine if the captured CID matches the valid CID, enabling or denying access to the debug session accordingly. ID selector 314 may dynamically select the appropriate CID for the current debug operation based on the validation performed by comparator 308. As such, ID selector 314 may ensure that debug operations are conducted under the correct CID, maintaining the integrity and security of the debug session.

A "SW Debugger Access Enable" signal output by comparator 308 may enable access to the debug session for software-based debug requestors through transaction (Xaction) filter 312. Xction filter 312 may be configured to filter debug-related transactions based on access control policies provided by security enclave 208 so that only authorized transactions may proceed, preventing unauthorized access. Xaction filter 312 may ensure that all transactions valid or invalid complete with a response, for example, so that the bus is not hung in case of an invalid transaction.

DSAC 201A may be configured to manage and control debug access dynamically, ensuring secure and efficient debugging across multiple cohorts in SoC 100. Security Enclave 208 may verify the identity of debug requestors and enforces access control policies, and it interfaces with DSAC 201A to ensure that only authenticated and authorized users can access the debug features of SoC 100.

Port control 301 may dynamically manage access rights for different initiator ports, such as JTAG DP 303 and software ports, based on the security enclave's access control policy. CID/Address Capture Block 302 may capture cohort identity information from an upper address bit or control register for debug requestors and provides the captured cohort identity to comparator 306 for validation.

Comparator 306 may receive the captured cohort identity from CID/Address Capture Block 302 and a valid CID from control register 309 to determine if the captured CID matches the valid CID, enabling or denying access to the debug session accordingly. The validity of each possible CIDs during a particular debug session may be stored in registers 307A-N. Control registers 309 may store control information for managing the debug session, while the status register 310 records the status of the debug session, including the identity of the current debug requestor holding a lock bit, discussed below.

Software 305 may also interact with DSAC 201A to initiate and manage debug sessions. CID/Address Capture Block 304 may capture CID information from an incoming bus for debug requestors, and it may provide the captured cohort identity to comparator 308 for validation. Comparator 308 may receive the captured CID and a valid CID from security enclave 208, determining if the captured cohort identity matches the valid cohort identity and enabling or denying access to the debug session accordingly.

ID selector 314 may dynamically select the appropriate cohort identity for the current debug operation based on the validation performed by comparator 308, so that debug operations may be conducted under the correct cohort identity. A SW Debugger Access Enable signal may enable access to the debug session for software-based debug requestors, while Xaction filter 312 filters debug-related transactions based on access control policies provided by the security enclave 208.

In operation, DSAC 201A includes access control for JTAG 303 and software ports 305 to internal DSAC registers 309 and 310 or for transactions through architecture 200. Software input port 205 may have a bus CID requirement, while JTAG port 300 may have no such requirement. A two-phase access may be in progress for a particular software bus CID or JTAG port and cannot be interfered with by another port or another bus CID.

The DSAC 201A also features address-based "Preference CID" capture 302/304 and comparison 306 and 308 blocks. For the JTAG port, the CID preference may be captured from the bus upper (unused in the address space) address bits. In some cases, the software CID preference may be programmed by software in a DSAC control register once software has access. A software bus CID or JTAG access may be permitted to assume a Preference CID in the system interconnect if the security debug token permits. Other embodiments, however, may allow JTAG to program CID preference or to capture software's preference CID from upper address bits or sideband user bits.

DSAC 201A's address capture 302 and 304 and comparison 306 and 308 blocks, one each for JTAG and software ports, may also compare the target debug address to determine whether the transaction is targeting SDC-600 207, DSAC control 309 and status registers 310, system interconnect 211, or debug infrastructure 200. These components may ensure that debug transactions adhere to access restrictions based on the current state of the system, such as port denial, authentication in progress, or semaphore blocking due to two-phase access.

A port control state machine within the DSAC block may take inputs from the security enclave, including Acknowledge, Pass, Both Ports (permitted), and Security Violation signals. It may also receive an Auth Start input from comparators 306/308, access policy inputs from control register 310, and control signals for Multiple Software Auth Not Allowed. The state machine may manage SDC-600 207, APBIC 209, and system accesses for both software and external debuggers.

Two transaction filters 311 and 312 within the DSAC block may pass or terminate transactions based on the comparator output for software or JTAG debuggers. The DSAC interface control in security enclave 208 ensures that only authorized transactions proceed. ID selector 314 selects the CID based on valid cohort select bits in the control register, valid cohort IDs from the security enclave, and the incoming transaction CID.

DSAC 201 also includes status registers 310 that include a semaphore locked bit, which gets set when the first access to the register is done, a 3-bit CID of the cohort that locked the semaphore, an 8-bit incoming transaction Master ID, access policy bits, and the last access port for SDC-600 207, indicating which debugger (software or external) has initiated authentication.

Control registers 309 include a Release Semaphore Lock bit (W1C) that clears the semaphore locked status bit, a Multiple Software Authentication Not Allowed bit that can be set to 1 by any cohort having debug access to block accesses to SDC-600 207 from any other cohort, and valid cohort ID select bits that are one-hot encoded with the number of cohorts supported on the device. Valid cohort ID registers 307A-N are implemented in the CSSI block and connected to DSAC 201A.

DSAC 201 may perform Automatic Identification and Data Capture (AIDA) operations to automatically identify and capture relevant data during debug sessions. Such AIDA mechanism may be configured to ensure that the correct CID and associated data are accurately captured and used for managing debug operations.

First, DSAC 201A may identify the cohort initiating the debug operation by capturing the cohort identity (CID) from the incoming debug request. Once the cohort is identified, DSAC 201 may capture relevant data associated with the debug operation, such as the target address, debug commands, and other transaction-specific information. The captured data may be validated against the access control policies and security settings enforced by security enclave 208 to comply with the security requirements and that only authorized transactions are allowed to proceed. Based on the validated data, DSAC 201 may dynamically manage access to the debug infrastructure and shared resources, for example, by enabling or disabling access for specific cohorts, managing semaphore locks, and ensuring that debug transactions are conducted in a secure and controlled manner.

In various embodiments, external and software debuggers may work together in the same debug session based on the security enclave 208's access policy using a semaphore mechanism to lock access to APBIC 209. These debuggers may also work in a mutually exclusive mode based on the security enclave access policy, with the mode remaining persistent for a destructive reset cycle. In selected applications, if one debugger is active, any transaction from the other may always be denied access.

The CID for the software debugger may be captured from the preference CID written in control register 309 and from upper address bits for the external debugger. CID and address bits are then presented to comparators 306 or 308 for valid transaction evaluation. Alternatively, for the software debugger, incoming AXI user bits or upper address bits may also serve as the preference CID.

If the external or software debugger transaction address is within the lower and upper address range of SDC-600 207, the comparison of the incoming CID with valid cohort IDs may be bypassed. The SDC-600 207's Read-Only Memory General-Purpose Registers (ROM GPR) may lie within the lower and upper address range parameters in the APBIC map and hence may remain always accessible to the external debugger and software debugger until the Multiple SW Auth Not Allowed bit is set to 1 in control register 309-which is only applicable to software accesses.

After the software or external debugger requests access to SDC-600 207 and performs a Challenge-Response Protocol (CHRP), security enclave 208 may configure valid cohort IDs in its internal registers, which may be mapped to valid cohort ID signals in 207A-N. In case of any access outside the lower and upper address range of SDC-600 207, the CID of the incoming transaction (based on upper address bits for the external debugger and incoming bus CID for the software debugger) may be compared with valid cohort ID registers, and access may be allowed based on that comparison.

Access to control registers 309 may be allowed if the incoming bus CID comparison with valid bus CID registers succeeds and, if the semaphore is locked, the incoming CID matches the locked semaphore CID. Access to status registers 310 may be allowed if the incoming bus CID comparison with valid bus CID registers succeeds. Different valid preference CIDs may be used by the external debugger and software debugger if authenticated in the same debug session.

If valid CID registers 207A-N are 0 (no challenge/response done), the CID comparison may fail, and no access may be allowed. Valid CID registers may be reset on each destructive reset cycle and may be set to valid IDs only after a successful challenge response. In some cases, any transaction for which the debugger access_enable output is 0 may be terminated with a bus error from the transaction filter block; otherwise, it may be sent to switch 313.

Capture blocks 302 and 304 for the software and external debugger may set the corresponding debug active signal to detect the first transaction from either one of them. In the case of simultaneous access from the software and external debugger in the same cycle, the external debugger may be given priority. The CID going to the AXI AP may depend on the output of the ID selector 314, which may select the CID based on valid cohort select bits in control register 309, valid cohort IDs from security enclave 208, and the incoming transaction CID.

In various embodiments, to manage and control debug operations DSAC 201A utilizes a set of control and status registers. These registers may be configured to maintain the integrity and security of the debug session by storing and managing various control signals, status indicators, and access policies. The control and status registers may ensure that only authenticated and authorized debug requestors access the debug infrastructure and shared resources, and they may facilitate the dynamic switching of debug access between different cohorts.

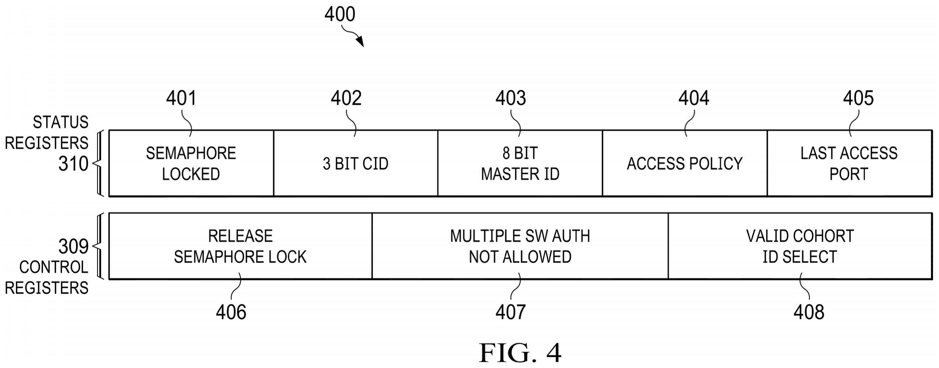

FIG. 4 is a diagram of examples of status and control registers 400 usable by the DSAC 201A. Particularly, status registers 310 may include: semaphore locked 401, 3-bit CID 402, 8-bit ID 403, access policy 404, and Last Access Port (LAP) 405. Meanwhile, control registers 309 may include: Release Semaphore Lock (RSL) 406, Multiple SW Auth Not Allowed (MSANA) 407, and Valid Cohort ID Select (VCIS) 408.

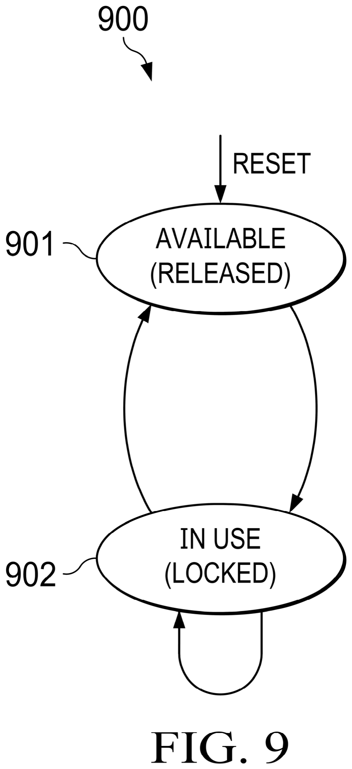

In some embodiments, status registers 310 may record the status of the debug session, including the identity of the current debug requestor holding a semaphore lock, described in more detail with respect to FIG. 9. As such, status registers 310 may allow other debug requestors to poll the status and gain access to shared resources when the lock is released.

Among status registers 310, semaphore locked 401 may indicate whether the semaphore mechanism is currently locked, preventing other debug requestors from accessing shared resources, so that only one debug requestor can access the shared resources at a time, maintaining data integrity and preventing conflicts. 3-bit CID 402 may store the cohort identity of the debug requestor that currently holds the semaphore lock. This information may be used to manage access control and ensure that only the authorized cohort can access the shared resources during the debug session. 8-bit ID 403 may record the ID of the debug requestor holding the semaphore lock. This ID may help in identifying the specific debug requestor and managing access rights accordingly.

Access policy 404 may contain the access control policies enforced by security enclave 208. These policies may determine the access rights and permissions for different debug requestors, ensuring secure and controlled access to the debug infrastructure. LAP 405 may indicate the port through which the last access to the debug infrastructure was made, to help in managing and controlling access rights for subsequent debug requestors.

In some embodiments, control registers 309 may store control information for managing the debug session. These registers may interact with other components to enforce access control policies and manage the debug operations effectively. Particularly, RSL 406 may allow the current debug requestor to release the semaphore lock, enabling other requestors to access the shared resources.

In some cases, MSANA 407 may prevent multiple software-based debug requestors from being authenticated simultaneously so that only one software-based debug requestor can access the debug session at a time, maintaining the integrity and security of the debug operations. VCIS 408 may select the valid cohort identities for the current debug session based, at least in part, on the access control policies and ensures that only authorized cohorts can participate in the debug session. In some cases, VCIS 408 may be implemented as registers 307A-N.

In various embodiments, to manage access rights and enforce access control policies during a debug session, the DSAC 201A may employ a port control state machine. This state machine may be responsible for dynamically managing the states and transitions of the debug access process, ensuring that only authenticated and authorized debug requestors can access the debug infrastructure.

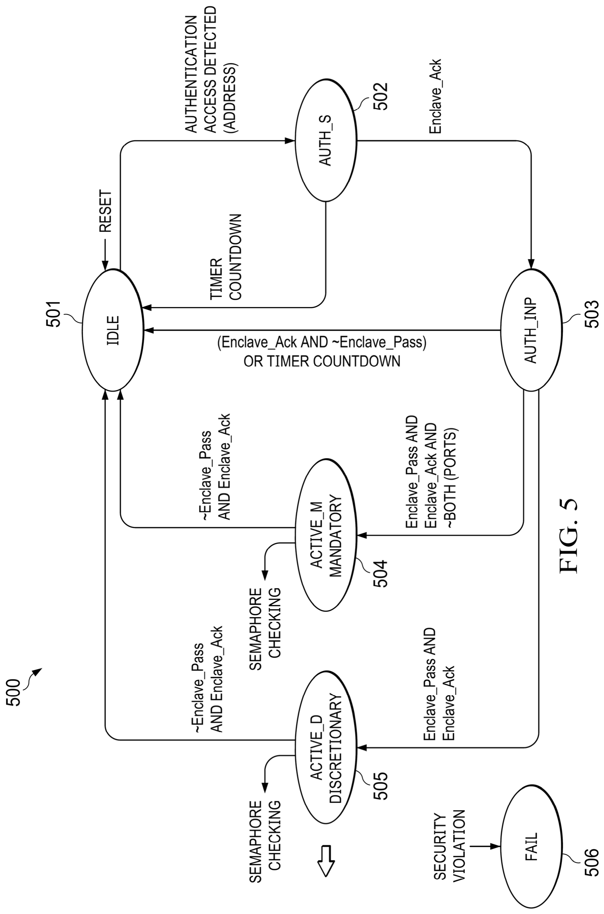

FIG. 5 is a diagram of an example of port control state machine 500 implemented by DSAC 201A. In various embodiments, port control state machine 500 may inputs from security enclave 208, including signals such as Acknowledge, Pass, Both Ports (permitted), and Security Violation. It may receive inputs from the CID/Address Comparators 306/308, access policy inputs from control register 309, and control signals for Multiple Software Auth Not Allowed. Based at least in part on these inputs, port control state machine 500 may manage the authentication process, access control, and semaphore checking to maintain the integrity and security of the debug session.

Particularly, at 501, state machine 500 starts in the IDLE state. In this state, the system awaits an authentication access detection signal or a reset signal. The IDLE state may transition to the AUTH_S state upon detecting an authentication access. At 502, state machine 500 enters the AUTH_S state when an authentication access is detected. In this state, the system waits for an Enclave_Ack signal to proceed. Upon receiving the Enclave_Ack signal, state machine 500 transitions to the AUTH_INP state.

At 503, state machine 500 enters the AUTH_INP state. In this state, the system waits for either an Enclave_Ack and Enclave_Pass signal or a timer countdown to complete. If an Enclave_Pass and EnclaveAck is received before the timer countdown, and only one port is enabled by the security enclave then the state machine transitions to the ACTIVE_M state. If the timer countdown is received before transitioning to the ACTIVE_M state then the state machine transitions to the IDLE state. At 504, state machine 500 enters the ACTIVE_M state. In this state, the system performs semaphore checking. If the Enclave_Pass and Enclave_Ack signals remain asserted, the state machine remains in the ACTIVE_M state. If the Enclave_Pass and Enclave_Ack signals are no longer received, the state machine transitions to the IDLE state.

At 505, state machine 500 enters the ACTIVE_D (discretionary) state. In this state, the system continues semaphore checking. The ACTIVE_D state is entered if the Enclave_Pass and Enclave_Ack signals are received and both ports are enabled by the security enclave (but only the original requestor port is enabled by port control register within the DSAC-the original requestor now has the discretion to allow the other port access too by programming the DSAC control register). If the Enclave_Pass and Enclave_Ack signals are no longer received, the state machine transitions to the IDLE state. If a security violation occurs, the state machine transitions to the FAIL state. At 506, state machine 500 enters the FAIL state. In this state, the system handles security violations and prevents unauthorized access to the debug session. State machine 500 remains in the FAIL state until a reset signal is received, which transitions the state machine back to the IDLE state.

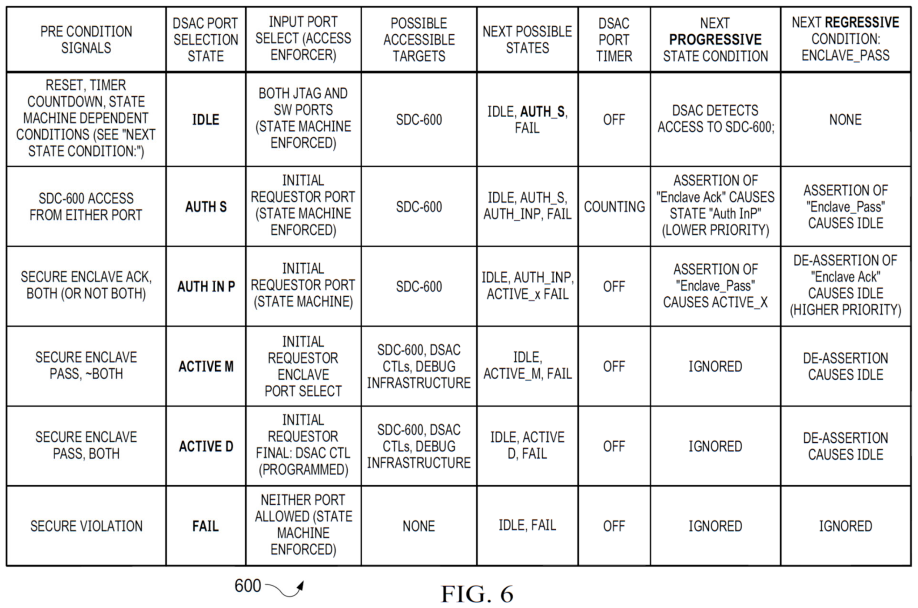

FIG. 6 shows table 600 of examples of possible states of the port control state machine. Table 600 provides a detailed overview of the various states, conditions, and transitions that port control state machine 500 may undergo during a debug session. The table is organized into several columns, each representing different aspects of the state machine's operation.

The first column, "Pre Condition Signals," lists the signals or conditions that trigger state transitions. These may include reset signals, timer countdowns, and state machine-dependent conditions. The second column, "DSAC Port Selection State," may indicate the current state of the port control state machine, such as IDLE, AUTH_S, AUTH_INP, ACTIVE_M, ACTIVE_D, and FAIL.

The third column, "Input Port Select (Access Enforcer)," may specify the input ports that are being enforced by the state machine. For example, in the IDLE state, both JTAG and software (SW) ports are enforced, while in the AUTH_S state, the initial requestor port is enforced.

The fourth column, "Possible Accessible Targets," lists the targets that may be accessed in each state. These targets may include the SDC-600, DSAC control and status registers, and the debug infrastructure. The fifth column, "Next Possible States," indicates the potential states that the state machine can transition to from the current state, such as IDLE, AUTH_S, AUTH_INP, ACTIVE_M, ACTIVE_D, and FAIL.

The sixth column, "DSAC Port Timer," shows the status of the port timer, which can be either OFF or COUNTING. The seventh column, "Next Progressive State Condition," describes the conditions that cause the state machine to progress to the next state. For example, in the IDLE state, the state machine may detect access to the SDC-600, while in the AUTH_S state, an assertion may cause a request (low priority).

The eighth column, "Next Regressive Condition: Enclave_Pass," lists the conditions that cause the state machine to regress to a previous state. For example, in the AUTH_S state, an assertion causes the state machine to regress to the IDLE state, while in the AUTH_INP state, an assertion causes the state machine to regress to the ACTIVE_X state.

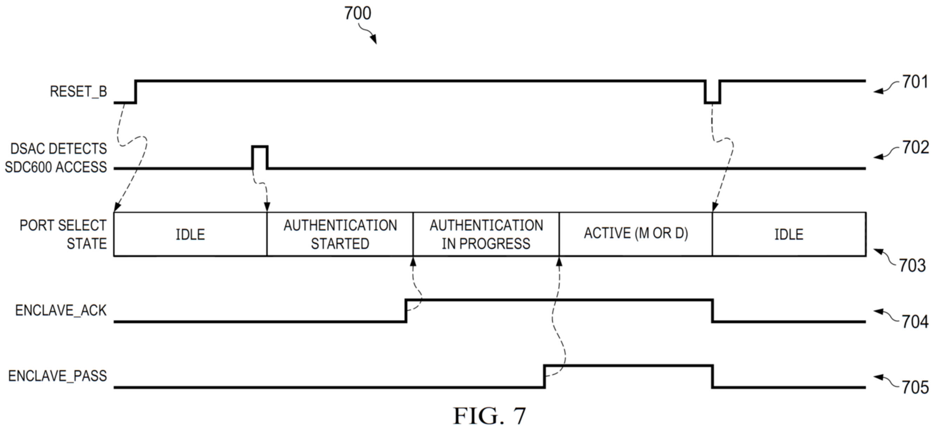

**FIG.** 7 is a graph 700 of signals 701-705 triggering different states of port control state machine 500. Particularly, graph 700 is a timing diagram 700 illustrating the various states 703 and signals 701, 702, 704, and 705 involved in port control state machine 500 of DSAC 201A to manage the authentication and access control process during a debug session, starting from IDLE, to AUTHENTICATION STARTED, then AUTHENTICATION IN PROGRESS, to ACTIVE (M OR D), and back to IDLE again.

As shown, signal 701 represents a RESET_B signal, which may be used to reset the state machine. When the RESET_B signal is asserted, the state machine transitions to the IDLE state, indicating that the system is awaiting an authentication access detection signal or a reset signal. Signal 702 represents the DSAC DETECTS SDC600 ACCESS signal, which indicates that DSAC 201A has detected an access to SDC600 207. This detection triggers state machine 500 to transition from the IDLE state to the AUTHENTICATION STARTED state, initiating the authentication process. These sub-states may define the various stages of the authentication and access control process, from the initial detection of an access request to the active management of debug operations.

Signal 704 represents the Enclave_Ack signal, which is generated by the security enclave to acknowledge the authentication request. Upon receiving the Enclave_Ack signal, state machine 500 may transition from the AUTHENTICATION STARTED state to the AUTHENTICATION IN PROGRESS state, indicating that the authentication process is underway.

Meanwhile, signal 705 represents the Enclave_Pass signal, which is generated by the security enclave to indicate that the authentication process has been successfully completed. Upon receiving the Enclave_Pass signal, state machine 500 transitions from the AUTHENTICATION IN PROGRESS state to the ACTIVE (M OR D) state, allowing the debug operations to proceed in a controlled and secure manner.

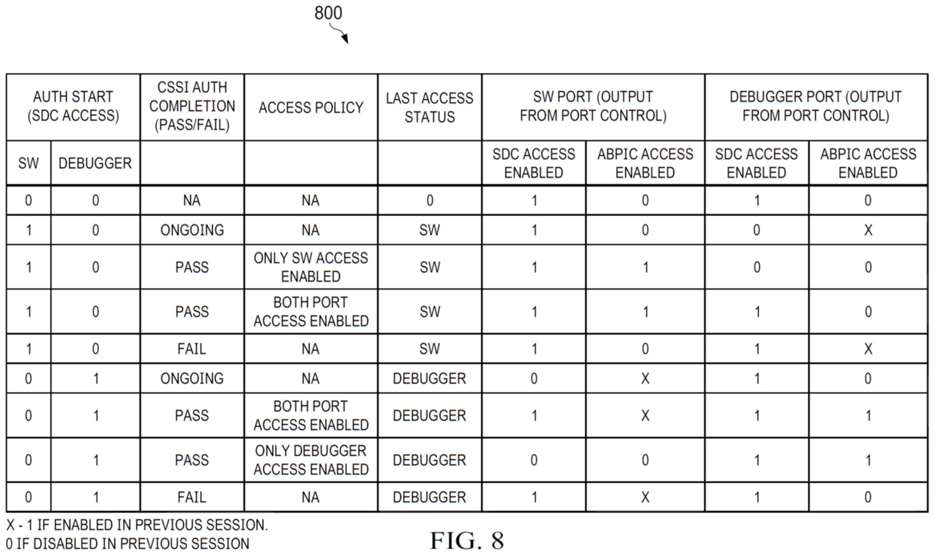

FIG. 8 shows table 800 of examples of access enable behavior in different conditions. The table provides a detailed overview of the various states, conditions, and transitions that the port control state machine may undergo during a debug session. The table is organized into several columns, each representing different aspects of the state machine's operation.

Particularly, table 800 outlines various conditions and corresponding access enable states for both software and external debuggers. Table 800 is organized into columns representing different input conditions, such as the authentication status of the software and external debuggers, the access policy enforced by security enclave 208, and the last access status of SDC-600 207. Each row in the table corresponds to a specific combination of these input conditions and details the resulting access enable states for the SDC-600 209 and APBIC 209 for both software and external debuggers. Table 800 also includes special conditions, such as ongoing authentication processes and failed authentication attempts, and their impact on access permissions.

**In** various embodiments, DSAC 201 may employ a two-phase bus transaction and semaphore control mechanism to manage access to debug infrastructure 200 and system interconnect 211. For example, in debug implementations that support larger memory spaces than the addressing of the debug transactions, a two-phase data-write mechanism may be used. In the first phase, an intended target address may be written to a debug address register. In the second phase, the actual data may be written. During this second phase, the address register may be collected and placed onto the address bus to the target system while the data is carried on the data bus. This technique may allow a small address space to be converted into a larger address space.

This two-phase approach assumes that the second phase will always occur consecutively after the first phase. However, when there are multiple active debug channels on the SoC, there is a need to orchestrate the debug bus transactions to ensure this assumption is always met. Otherwise, one debug channel may start the first phase, and before writing the second phase, another debug channel might attempt to access the debug infrastructure to start its first phase as well. The debug implementation may then interpret the second channel's first access as the second phase of the first debug channel, resulting in the wrong data being written to the first channel's intended target.

To prevent such interference, DSAC 201 may provide a semaphore control mechanism. The DSAC's semaphore control ensures that when an access is determined to be to the debug infrastructure (not the DSAC registers or SDC-600), only the present semaphore owner-the first debug channel to start a write access to the debug infrastructure (as identified by its CID)-may be allowed to perform the subsequent data writes. This blocks access from all other cohorts or JTAG until the second phase is completed or until the semaphore-owning debug channel releases the semaphore. Once the semaphore is released, DSAC's semaphore control may enable any of the allowed cohorts or JTAG ports to claim the semaphore for access to the debug infrastructure.

Channels to debug infrastructure 200 and system access may not interfere with each other, so each address region may have its own respective semaphore-based access controls, thereby not denying access to other cohorts unnecessarily. In the case of access solely from an external JTAG debugger, a semaphore is not required as the debugger itself may serialize the two-phase accesses in the same debug session, even if multiple preference CIDs are valid.

In the case of software-based debugging or JTAG debugging, any cohort and port that has first been authenticated for debug may write a "1" to the Region Semaphore Control register bit "Multiple Authentication Not Allowed" to prohibit access to SDC-600 207 from any other subsequent incoming cohort or port. If this bit is not set, and the security enclave policy allows for a second cohort or JTAG, then another port or software bus cohort may be authenticated in the same debug session. Preference CIDs are also authenticated, but they may not be denied region access with this mechanism, only the Bus CIDs and ports (software or JTAG).

In the case of multiple cohorts connected in the same remote debug session, the first read to the Region Semaphore Status register may lock (In Use state) the semaphore for that cohort (Bus CID or JTAG). All other cohorts (or JTAG) may be denied access to that region. Another cohort (or JTAG) may keep polling the status register until it gets the lock on the semaphore. The first cohort (or JTAG) may release the semaphore by writing to the Release Semaphore Lock bit. As such, this mechanism may ensure that indirect accesses (address, data) to DP registers do not get corrupted.

In that regard, FIG. 9 is a diagram of an example of semaphore state machine 900 of DSAC 201A. In various embodiments, semaphore state machine 900 may enable debug transactions are atomic and do not interfere with each other, thereby preventing data corruption when multiple cohorts are being debugged simultaneously.

Semaphore state machine 900 may be configured to lock access to shared resources for the duration of a debug operation initiated by a cohort. When a debug requestor initiates a debug operation, the semaphore mechanism may lock access to the shared resources by setting the semaphore locked signal, thereby ensuring that only the current debug requestor can access the shared resources, preventing other cohorts from interfering with the ongoing debug operation.

Semaphore state machine 900 may include several states, such as IDLE, IN USE, and AVAILABLE. In the IDLE state (not shown), the semaphore is not locked, and any debug requestor can initiate a debug operation. When a debug requestor starts a debug operation, state machine 900 transitions to the IN USE state at 902, setting the semaphore locked signal and recording the cohort identity (CID) of the debug requestor. This ensures that only the current debug requestor can access the shared resources.

While in the IN USE state, semaphore state machine 900 may prevent other cohorts from accessing the shared resources. Other debug requestors may poll the status of the semaphore locked signal to determine if the shared resources are available. If the semaphore is locked, these other requestors may have to wait until the current debug operation is complete and the lock is released.

Once the debug operation is finished, the semaphore mechanism clears the semaphore locked signal, releasing the lock and allowing other cohorts to access the shared resources. State machine 900 then transitions to the AVAILABLE state at 901, indicating that the shared resources are now accessible to other debug requestors.

**In** some implementations, semaphore state machine 900 may also include mechanisms for handling simultaneous access requests. For example, in the case of simultaneous access from software and external debuggers, the external debugger may be given priority. The CID going to the AXI AP may depend upon the output of ID selector 314, which selects the CID based on valid cohort select bits in the control register, valid cohort IDs from security enclave 208, and the incoming transaction CID.

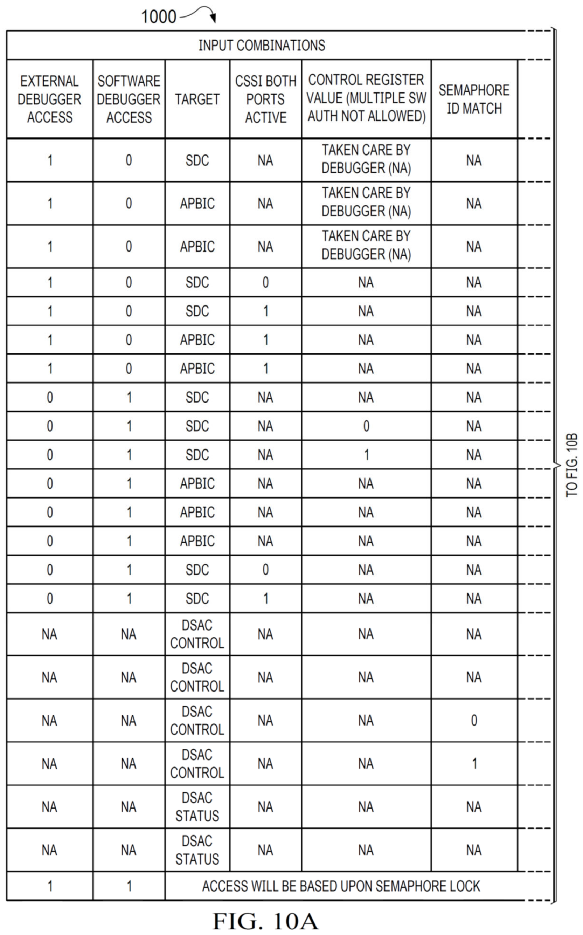

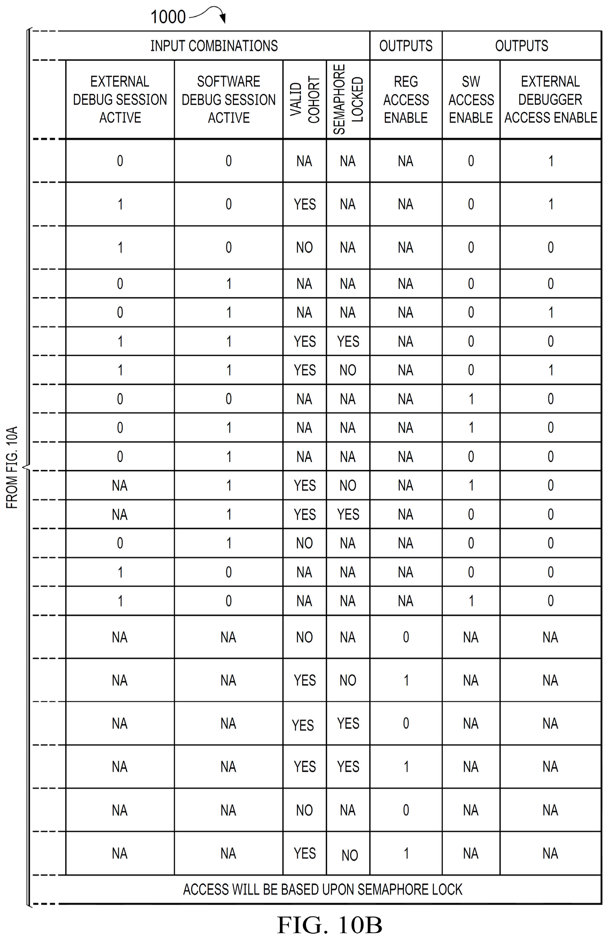

FIGs. 10A and 10B show table 1000 of examples of possible states of semaphore state machine 900. Table 1000 provides a detailed explanation of an example of how the semaphore mechanism may be employed to dynamically manage access to shared resources in a multi-cohort SoC debugging environment in a way that ensures atomic and non-interfering debug transactions, thereby maintaining the integrity and security of the debug session in a multi-cohort SoC environment.

Particularly, table 1000 is organized into columns representing different input conditions and corresponding semaphore states. These input conditions may include the type of debugger making the access request (software or external), the target resource being accessed (such as the Secure Debug Channel (SDC-600) or the Advanced Peripheral Bus Interconnect (APBIC)), specific control register values, such as the "Multiple Software Authentication Not Allowed" bit, among other inputs.

Each row in table 1000 corresponds to a specific combination of these input conditions and details the resulting semaphore states and access permissions. Table 1000 outlines whether the semaphore is locked or available, which cohort or debugger currently holds the semaphore, and the conditions under which the semaphore can be released or acquired by another cohort or debugger. It also specifies the status of the debug session, indicating whether the external or software debugger session is active and whether the access to the target resource is enabled or denied.

Table 1000 includes special cases, such as when only an external debugger is active, in which case the semaphore is managed by the external debugger itself, and scenarios where both software and external debuggers are active, requiring DSAC 201A to manage the semaphore to prevent data corruption.

As such, systems and methods described herein may support various debug host scenarios with enforced isolation to ensure secure and efficient debugging in a multi-cohort SoC environment. These scenarios include JTAG-only hosts, where a single cohort or multiple cohorts can be debugged in a session. For remote-only hosts, these systems and methods may support debugging with one cohort and one delegate host (software), multiple cohorts with one delegate host, or multiple cohorts with multiple delegate hosts.

Additionally, or alternatively, systems and methods described herein may accommodate, for example, scenarios involving both remote and JTAG hosts, allowing for one cohort with one delegate host, multiple cohorts with one delegate host, or multiple cohorts with multiple delegate hosts. By supporting these diverse configurations, these systems and methods may ensure that debug operations are conducted securely and efficiently, maintaining isolation between different cohorts and preventing unauthorized access or data corruption.

In some implementations, systems and methods described herein may enable various debug host scenarios, ensuring secure and efficient debugging in a multi-cohort SoC environment. Based on debug host authorization from the Secure Debug Manager 205 and a Debug Client or Host, a signed token containing the partitioning contract and debug host rules may be provided to the security enclave 208. Each signed token may be specific to one cohort and one debug host. Security enclave 208 may use the partitioning contract and debug host rules to determine the type of debug session-whether it is JTAG-only, Remote-only, or a Discretionary combined host debug session-and which system cohort ID is allowed.

Moreover, in systems and methods described herein, the discretion to combine debug sessions may be given to the initial request. This may result in various configurations, including one cohort debug session, multiple cohorts, remote-only hosts with one cohort and one delegate host (software), multiple cohorts with one delegate host, multiple cohorts with multiple delegate hosts, and scenarios involving both remote and JTAG hosts. By supporting these diverse configurations, these systems ensure that debug operations are conducted securely and efficiently, maintaining isolation between different cohorts and preventing unauthorized access or data corruption.

**In** various embodiments, systems and methods described herein may implement hardware semaphores, so that debug transactions may be made atomic and not interfere with each other. Such semaphore mechanisms may lock access to shared resources for the duration of a debug operation initiated by a cohort, preventing other cohorts from accessing these resources until the operation is complete. This approach maintains data integrity and prevents conflicts, allowing for graceful dynamic switching of debug and trace access between different cohorts.

Additionally, or alternatively, systems and methods described herein may provide protection for debug resources by ensuring that only authenticated debug requestors can access the debug infrastructure. Security enclave 208 may verify the identity of debug requestors and enforce access control policies, preventing unauthorized access and potential data corruption.

Additionally, or alternatively, systems and methods described herein may enable remote debugging and cohort debugging while supporting multiple external debug interfaces and cohorts. These systems and methods may manage access rights dynamically, ensuring that debug operations are conducted securely and efficiently, maintaining isolation between different cohorts, and preventing unauthorized access or data corruption.

Additionally, or alternatively, systems and methods described herein may synchronize the use of the debug infrastructure without requiring a common software execution environment, such that when remote debug is established, local access may be managed to prevent potential security threats. These systems and methods may allow local access to deny remote access while local debugging is in progress, ensuring that both local and remote sessions can coexist securely. Both local and remote debug users may authenticate with their respective credentials, and multiple remote sessions may be enforced to authenticate concurrently.

Additionally, or alternatively, systems and methods described herein may control access between cohorts and localities (remote or local) for debug infrastructure access. Local debuggers may not be allowed to access the debug infrastructure during an established remote session unless the remote debugger's credentials allow access. If local access is permitted, the permission may be at the discretion of the remote debug user, who may also manage multiple simultaneous remote debug connections. These systems and methods may enable remote or local debug sessions to authenticate for access to one or more debug channels and processing elements and to select the appropriate channel within the same debug session.

In an illustrative, non-limiting embodiment, an SoC may include an interconnect and a DSAC circuit coupled to the interconnect, the DSAC circuit configured to: enable a debug session for a first debug requestor, at least in part, in response to authentication of a first cohort identity provided by the first debug requestor; and enable a second debug requestor to participate in the debug session concurrently with the first debug requestor, at least in part, in response to authentication of a second cohort identity provided by the second debug requestor.

The first cohort identity may correspond to a first execution environment within the SoC, and the second cohort identity may correspond to a second execution environment within the SoC. Each of the first and second execution environments may include a distinct set of hardware and software resources.

The first debug requestor may access the DSAC circuit via one of: a local or a remote port, and the second debug requestor may access the DSAC circuit via the other one of: the local or remote port. The DSAC circuit may be configured to manage access rights for the first and second debug requestors based on one or more access control policies provided by a security enclave.

The security enclave may be configured to verify a signed token provided by the first debug requestor. Additionally, or alternatively, the security enclave may be configured to enforce a partitioning contract comprising one or more debug rules that identify at least one of: a local-only debugging mode, a remote-only debugging mode, a mixed debugging mode, identities of cohorts that are trusted to debug together, an access control policy, or access permissions for each cohort identity.

The DSAC circuit may be configured to manage access to shared SoC resources using a semaphore. Shared SoC resources may include at least one of: a processor, a NoC, a memory, a peripheral, a trace buffer, a DMA controller, an interrupt controller, a security module, a clock and power management unit, a debug interface, or an I/O port.

The semaphore may be configured to prioritize debug operations from an external debugger over debug operations from a software-based debugger in response to simultaneous access requests. In some cases, the semaphore may include a lock bit that allows access to a shared SoC resource for the duration of a first debug operation initiated by the first debug requestor and prevents the second debug requestor from accessing the shared SoC resources until the first debug operation is complete. The semaphore may also include a status register that records the first cohort identity while the first debug requestor holds the lock bit.

The semaphore may allow the second debug requestor to poll a status of the lock bit, and to gain access to the shared SoC resources in response to the lock bit being released by the first debug requestor. The lock bit may allow access to the shared SoC resource for the duration of a second debug operation initiated by the second debug requestor and prevent the first debug requestor from accessing the shared SoC resources until the second debug operation is complete. The status register may record the second cohort identity while the second debug requestor holds the lock bit. In some cases, the semaphore may allow the first debug requestor to poll a status of the lock bit, and to gain access to the shared SoC resources in response to the lock bit being released by the second debug requestor.

In some implementations, the DSAC circuit may be configured to select at least one of the first or second cohort identities using an ID selector. The DSAC circuit may be configured to capture cohort identity information from an upper address bit or control register for at least one of the first or second debug requestors.

In another illustrative, non-limiting embodiment, a DSAC circuit may include a comparator configured to receive a captured cohort identity and a valid cohort identity; a selector circuit coupled to the comparator, where the selector circuit is configured to select the captured cohort identity based, at least in part, upon a determination by the comparator that the captured cohort identity matches the valid cohort identity; and a multiplexer coupled to the selector circuit, where the multiplexer is configured to output a debug request associated with the selected cohort identity according to an access setting for a corresponding cohort of a multi-cohort SoC during a debug session.

In another illustrative, non-limiting embodiment, a method may include: establishing a debug session for a debug requestor, at least in part, in response to authentication of a cohort identity provided by the debug requestor, wherein the cohort identity corresponds to a set of resources allocated to a vendor or domain of a multi-cohort SoC; and allowing another debug requestor to participate in the debug session concurrently with the debug requestor, at least in part, in response to authentication of another cohort identity provided by the other debug requestor, wherein the other cohort identity corresponds to another set of resources allocated to another vendor or domain of the multi-cohort SoC.

Systems and methods for Dynamic Switch and Access Control (DSAC) for multi-cohort System-on-Chip (SoC) debugging. In an illustrative, non-limiting embodiment, an SoC may include: an interconnect and a DSAC circuit coupled to the interconnect, the DSAC circuit configured to: enable a debug session for a first debug requestor, at least in part, in response to authentication of a first cohort identity provided by the first debug requestor; and enable a second debug requestor to participate in the debug session concurrently with the first debug requestor, at least in part, in response to authentication of a second cohort identity provided by the second debug requestor.

In many implementations, systems and methods described herein may be incorporated into a wide range of electronic devices including, for example, computer systems or Information Technology (IT) products; consumer devices or appliances; scientific instrumentation; industrial robotics; medical or laboratory electronics; transportation vehicles such as automobiles, buses, trucks, trains, watercraft, aircraft, etc.; military equipment, etc.

For sake of brevity, conventional techniques have not been described in detail herein. Furthermore, the connecting lines shown in the various figures contained herein have been intended to illustrate relationships (e.g., logical) or physical couplings (e.g., electrical) between the various elements. It should be noted, however, that alternative relationships and connections may be used in other embodiments. Moreover, circuitry described herein may be implemented either in silicon or another semiconductor material or alternatively by software code representation thereof.

Although various systems and methods are described herein with reference to specific embodiments, modifications and changes may be made without departing from the scope of the present disclosure, as set forth in the claims below. Accordingly, the specification and figures are to be regarded in an illustrative rather than a restrictive sense, and all such modifications are intended to be included. Any benefits, advantages, or solutions to problems that are described herein regarding specific embodiments are not intended to be construed as a critical, required, or essential feature or element of any or all the claims.

Reference is made herein to "configuring" a device or a device "configured to" perform some operation(s). This may include selecting predefined logic blocks and logically associating them. It may also include programming computer software-based logic of a retrofit control device, wiring discrete hardware components, or a combination thereof. Such configured devices are physically designed to perform the specified operation(s).

Unless stated otherwise, terms such as "first" and "second" are used to arbitrarily distinguish between the elements such terms describe. Thus, these terms are not necessarily intended to indicate temporal or other prioritization of such elements. The terms "coupled" or "operably coupled" are defined as connected, although not necessarily directly, and not necessarily mechanically. The terms "a" and "an" are defined as one or more unless stated otherwise. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system, device, or apparatus that "comprises," "has," "includes" or "contains" one or more elements possesses those one or more elements but is not limited to possessing only those one or more elements. Similarly, a method or process that "comprises," "has," "includes" or "contains" one or more operations possesses those one or more operations but is not limited to possessing only those one or more operations.

## Claims

1. A System-On-Chip (SoC), comprising:
an interconnect; and
a Dynamic Switch and Access Control (DSAC) circuit coupled to the interconnect, the DSAC circuit configured to:
enable a debug session for a first debug requestor, at least in part, in response to authentication of a first cohort identity provided by the first debug requestor; and
enable a second debug requestor to participate in the debug session concurrently with the first debug requestor, at least in part, in response to authentication of a second cohort identity provided by the second debug requestor.

2. The SoC of claim 1, wherein the first cohort identity corresponds to a first execution environment within the SoC, and wherein the second cohort identity corresponds to a second execution environment within the SoC.

3. The SoC of claim 2, wherein each of the first and second execution environments comprises a distinct set of hardware and software resources.

4. The SoC of any preceding claim, wherein the first debug requestor accesses the DSAC circuit via one of: a local or a remote port, and wherein the second debug requestor accesses the DSAC circuit via the other one of: the local or remote port.

5. The SoC of any preceding claim, wherein the DSAC circuit is configured to manage access rights for the first and second debug requestors based on one or more access control policies provided by a security enclave.

6. The SoC of claim 5, wherein the security enclave is configured to verify a signed token provided by the first debug requestor.

7. The SoC of claim 5 or 6, wherein the security enclave is configured to enforce a partitioning contract comprising one or more debug rules that identify at least one of: a local-only debugging mode, a remote-only debugging mode, a mixed debugging mode, identities of cohorts that are trusted to debug together, an access control policy, or access permissions for each cohort identity.

8. The SoC of any preceding claim, wherein the DSAC circuit is configured to manage access to shared SoC resources using a semaphore.

9. The SoC of claim 8, wherein the shared SoC resources comprise at least one of: a processor, a Network-on-Chip (NoC), a memory, a peripheral, a trace buffer, a Dynamic Memory Access (DMA) controller, an interrupt controller, a security module, a clock and power management unit, a debug interface, or an I/O port.

10. The SoC of claim 8 or 9, wherein the semaphore is configured to prioritize debug operations from an external debugger over debug operations from a software-based debugger in response to simultaneous access requests.

11. The SoC of any of claims 8 to 10, wherein the semaphore comprises a lock bit that allows access to a shared SoC resource for the duration of a first debug operation initiated by the first debug requestor and prevents the second debug requestor from accessing the shared SoC resources until the first debug operation is complete.

12. The SoC of claim 11, wherein the semaphore comprises a status register that records the first cohort identity while the first debug requestor holds the lock bit.

13. The SoC of claim 12, wherein the semaphore allows the second debug requestor to poll a status of the lock bit, and to gain access to the shared SoC resources in response to the lock bit being released by the first debug requestor.

14. The SoC of any of claims 11 to 13, wherein the lock bit allows access to the shared SoC resource for the duration of a second debug operation initiated by the second debug requestor and prevents the first debug requestor from accessing the shared SoC resources until the second debug operation is complete.

15. The SoC of claim 14, wherein the status register records the second cohort identity while the second debug requestor holds the lock bit.
